# EUROPÄISCHE PATENTANMELDUNG

(11) **EP 1 048 397 A2**
(43) Veröffentlichungstag der Anmeldung: **02.11.2000**
(21) Anmeldenummer: 00108123.1
(22) Anmeldetag: 13.04.2000
(51) Int. Cl.: B23Q 3/18, B23Q 3/06, B23Q 1/00

(54) **Befestigung eines Einzugsnippels an einem Werkstück oder einer Trägerplatte**

(30) Priorität: 17.04.1999 DE 19917484
(71) Anmelder: Stark, Emil,, 6840 Götzis (AT)
(72) Erfinder: Stark, Emil,, 6840 Götzis (AT)
(74) Vertreter: Riebling, Peter, Dr.-Ing.

(57) **Zusammenfassung**

Die Erfindung betrifft einen Einzugsnippel mit Befestigung an einem Werkstück oder einer Trägerplatte wobei in der Trägerplatte mindestens eine Bohrung vorhanden ist und sich der Einzugsnippel mit einer ebenen Auflagefläche an einer zugeordneten Auflagefläche an der Aussenseite der Trägerplatte abstützt, welche Auflagefläche auch mittels einer auf den Einzugsnippel aufgeschraubten Einstellmutter gebildet werden kann. In einer zweiten Ausführungsform ist der Einzugsnippel über eine Schwenkvorrichtung schwenkbar und feststellbar an der Trägerplatte befestigt. In einer dritten Ausführungsform ist die Befestigung des Einzugsnippels über der Fläche der Trägerplatte mittels Einstellvorrichtungen einstellbar ausgebildet.

## Beschreibung

Gegenstand der Erfindung ist ein Einzugsnippel und dessen Befestigung an einem Werkstück oder einer Trägerplatte nach dem Oberbegriff des Patentanspruchs 1. Ein derartiger Einzugsnippel und dessen Befestigung an einem Werkstück oder einer Trägerplatte ist durch ältere Anmeldungen des Anmelders bekannt geworden. Diese älteren Anmeldungen sind dadurch gekennzeichnet, daß ein spielfreier, fester und passgenauer (Nullpunkt orientierter) Sitz des Einzugsnippels an der Befestigungsfläche dadurch erreicht wird, daß in die Befestigungsfläche von der Spannrichtung des Einzugsnippels her gesehen axiale Ansätze eingreifen, die sich mit axialen und radialen Flächen in der entsprechenden Aufnahme im Werkstück abstützen.

Der Einfachheit halber der folgenden Beschreibung wird in der folgenden Beschreibung nur auf die Befestigung eines Einzugsnippels an einer Trägerplatte bezug genommen. Unter dem Begriff 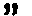 Trägerplatte" wird hier eine Werkstückpalette bezeichnet, auf welcher zu bearbeitende Werkstücke befestigt sind.

In einer zweiten Bedeutung hat der Begriff 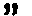 Trägerplatte" die Bedeutung, daß er identisch ist mit dem zu bearbeitenden Werkstück. Das heisst, im Rahmen der vorliegenden Erfindung ist es gleichgültig, an welcher Fläche der Einzugsnippel befestigt ist, diese Fläche kann entweder an einer Trägerplatte sich befinden oder an einem zu bearbeitenden Werkstück. Der Einfachheit halber wird nur noch im folgenden Verlauf die Befestigung an einer Trägerplatte näher beschrieben.

Beim Stand der Technik bestand also der Nachteil, daß die Trägerplatte selbst bearbeitet werden musste und entsprechende Aufnahmen ausbilden musste, die sehr passgenau bearbeitet waren, wodurch ein erhöhter Aufwand bei der Bearbeitung der Trägerplatte enstand. Weiterer Nachteil war, daß man in bestimmten Fällen in der Trägerplatte keine Bearbeitungen vornehmen durfte, was eine passgenaue Befestigung eines derartigen Einzugsnippels stark erschwerte.

Der Erfindung liegt deshalb die Aufgabe zugrunde, die Befestigung eines Einzugsnippels an einer Trägerplatte oder einer anderen Befestigungsfläche so weiterzubilden, daß der Einzugsnippel ohne Ansenkbohrung an der Trägerplatte befestigt werden kann.

Zur Lösung der gestellten Aufgabe ist die Erfindung durch die technische Lehre des Anspruchs 1 gekennzeichnet.

Wesentliches Merkmal der Erfindung ist, daß in der Trägerplatte mindestens eine Bohrung (Durchgangsbohrung oder Sackbohrung) vorhanden ist und daß sich der Einzugsnippel mit einer im wesentlichen ebenen Auflagefläche an einer zugeordneten Auflagefläche an der Aussenseite der Trägerplatte abstützt.

Mit der gegebenen technischen Lehre ergibt sich der wesentliche Vorteil, daß lediglich die Trägerplatte eine Durchgangs- oder Sackbohrung aufweisen muß, die in der Regel ohnedies vorhanden ist und nicht allein zur Befestigung eines Einzugsnippels in der Regel dient. In der Regel haben derartige Werkstücke oder Trägerplatten bereits schon entsprechende Durchgangsbohrungen oder Sackbohrungen, weil sie für die spätere Weiterverarbeitung dieses Werkstückes benötigt werden. Derartige Bohrungen werden auch für die Verschraubung des Werkstücks an entsprechenden Montageflächen benötigt, so daß davon ausgegangen werden kann, daß derartige Sackbohrungen oder Durchgangsbohrungen ohnedies in der Trägerplatte oder dem Werkstück vorhanden sind.

Die Erfindung macht sich nun diese technische Lehre zunutze und sieht diese Bohrung als Befestigungsbohrung für den Einzugsnippel vor, wobei der Einzugsnippel sich mit entsprechenden zugeordneten Gegenflächen, die im wesentlichen senkrecht zur Bohrungslängsachse sich erstrecken, an den Außenflächen der Trägerplatte anlegt.

Sinn der Maßnahme ist, daß mit der Befestigung eines derartigen Einzugsnippels an unterschiedlichen Befestigungspositionen einer Trägerplatte oder einem Werkstück es nun möglich ist, ein Werkstück mit befestigten Einzugsnippeln hochgenau zu bearbeiten. Die Einzugsnippel werden nämlich in einem entsprechenden Schnellspannzylinder jeweils aufgenommen, der die Einzugsnippel hochgenau aufnimmt, spannt und an entsprechenden Zentrierflächen zentriert, so daß eine hochgenaue Bearbeitung des mit dem Einzugsnippel verbundenen Werkstücks möglich ist. Das Werkstück kann aus dem Schnellspannzylinder ausgespannt werden, kann umgedreht und umgespannt werden und wieder in einer anderen Lage eingespannt werden, wodurch die hochgenaue Bearbeitung weitergeht, ohne daß die zugenannte Nullpunkt-Orientierung verloren geht. Ebenso kann die Bearbeitung auf mehreren hintereinanderfolgenden Bearbeitungsmaschinen erfolgen, wobei auf jeder Maschine eine derartige Anordnung von mehreren Schnellspannzylindern vorhanden ist, so daß das Werkstück hochgenau in mehreren hintereinander folgenden Bearbeitungsschritten entsprechend bearbeitet werden kann.

Vorteil der Erfindung ist also, daß nur eine geringfügige Bearbeitung der Trägerplatte erforderlich ist, d.h. es müssen lediglich entsprechende Sack- oder Durchgangsbohrungen vorhanden sein, die in der Regel von Haus aus schon vorhanden sind. Alle anderen Flächen (Anlageflächen für den Einzugsnippel) müssen nach einer ersten Gruppe von Erfindungsbeschreibungen relativ genau bearbeitet werden, während in einer zweiten Gruppe der vorliegenden Erfindungsbeschreibung auf eine hochgenaue Bearbeitung dieser Anlageflächen verzichtet werden kann, weil eine Pendellagerung vorgeschlagen wird.

Bei der zweiten Ausführungsgruppe kann sogar die Trägerplatte eine Rohplatte sein, deren Oberfläche überhaupt nicht bearbeitet ist oder ein Rohguß, weil durch die entsprechende Pendellagerung des Einzugsnippels eine hochgenaue Anlagefläche gegeben ist.

In einer dritten Ausgestaltung der Ausführungsformen ist im übrigen noch ein höheneinstellbarer Einzugsnippel vorgesehen, d.h. dessen Befestigung über der Fläche der Trägerplatte ist einstellbar ausgebildet.

Im übrigen ist es nicht lösungsnotwendig, daß die Längsachse durch den Einzugsnippel genau mit der Längsachse der Bohrung durch die Trägerplatte fluchtet. Diese beiden Längsachsen können auch im Winkel zueinander stehen, d.h. der Einzugsnippel wird dann im Winkel an der Trägerplatte befestigt.

Neben der Befestigung eines Einzugsnippels an einer Trägerplatte mit einer ebenen Aufspannung wird eine weitere Gruppe beschrieben, wo der Einzugsnippel in Form einer Schwenkvorrichtung an der Trägerplatte befestigt wird. Auf diese Weise kann der Einzugsnippel schwenkbar und feststellbar an der Trägerplatte befestigt und festgelegt werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: erste Ausführungsform für die Befestigung eines Einzugsnippels im Schnitt,
- Figur 2:: die zweite Ausführungsform der Befestigung,
- Figur 3:: die dritte Ausführungsform,
- Figur 4:: die vierte Ausführungsform,
- Figur 5:: die fünfte Ausführungsform,
- Figur 6:: die sechste Ausführungsform der Befestigung,
- Figur 7:: die Befestigung eines Einzugsnippels mit verlängertem Ansatz,
- Figur 8:: eine gegenüber Figur 7 zweite Ausführungsform,
- Figur 9:: eine Figur 7 dritte Ausführungsform,
- Figur 10:: eine gegenüber Figur 7 vierte Ausführungsform,
- Figur 11:: die Darstellung der Einspannung eines Einzugsnippels an einem Schnellspannzylinder mit Angabe der verschiedenen Passflächen,
- Figur 12:: die weitere Ausführungsform der Befestigung eines Einzugsnippels mit verlängertem Hals,
- Figur 13:: eine Pendellagerung eines Einzugsnippels,
- Figur 14:: eine zweite Ausführungsform einer Pendellagerung,
- Figur 15:: die höheneinstellbare Befestigung eines Einzugsnippels an einer Trägerplatte in einer ersten Ausführungsform,
- Figur 16:: die starre Befestigung eines Einzugsnippels mit verlängertem Hals,
- Figur 17:: gegenüber Figur 15 zweite Ausführungsform eines höheneinstellbaren Einzugsnippels,
- Figur 18:: die Schwenklagerung eines Einzugsnippels an einer Trägerplatte in Seitenansicht,
- Figur 19:: der um 90° versetzte Schnitt nach Figur 18,
- Figur 20:: eine zweite Ausführungsform einer Schwenklagerung eines Einzugsnippels,
- Figur 21:: der um 90° versetzte Schnitt nach Figur 20,
- Figur 22:: eine schräge Befestigung eines Einzugsnippels an einer Trägerplatte in einer ersten Ausführungsform,
- Figur 23:: eine gegenüber Figur 22 abgewandelte Ausführungsform,
- Figur 24:: eine gegenüber Figuren 22 und 23 abgewandelte Ausführungsform,
- Figur 25:: eine Befestigung eines Einzugsnippels mit einer Abstützung an einer Trägerplatte,
- Figur 26:: eine gegenüber Figur 25 abgewandelte Ausführungsform,
- Figur 27:: ein Einzugsnippel mit Befestigung auf einer zu bearbeitenden Werkstückwelle,
- Figur 28:: axiale Befestigung eines Einzugsnippels an einer zu bearbeitenden Werkstückwelle,
- Figur 29:: eine Spannbefestigung eines Einzugsnippels ein einer Trägerplatte in einer ersten Ausführungsform,
- Figur 30:: Spannbefestigung eines Einzugsnippels an einer zu bearbeitenden Werkstückwelle.

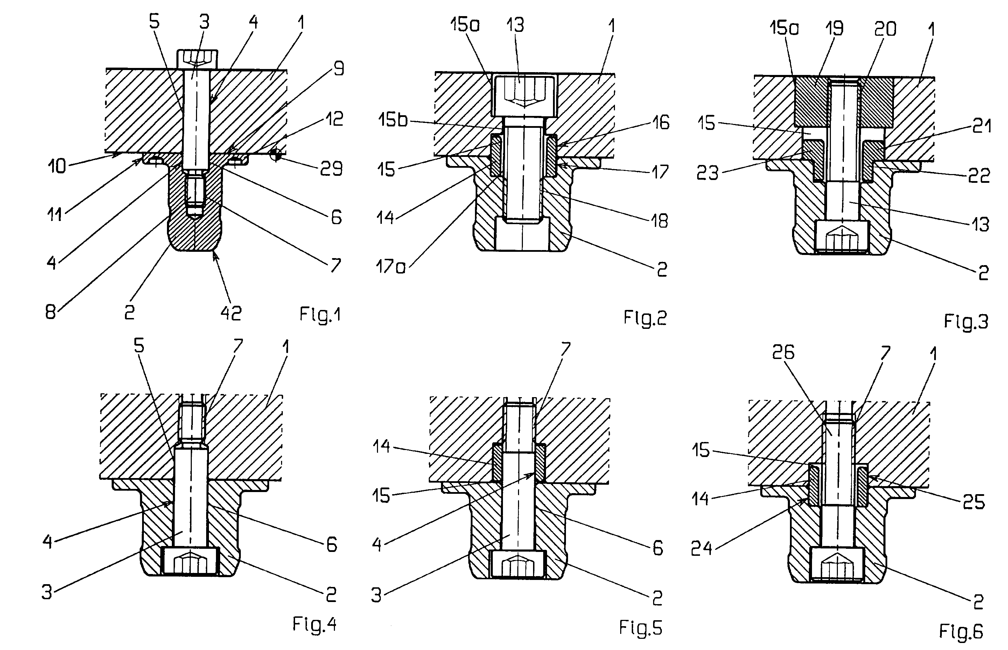

Gemäss Figur 1 ist in einer Trägerplatte 1 (die auch ein zu bearbeitendes Werkstück sein kann) eine hochgenau bearbeitete Passbohrung 5 angeordnet, die mit entsprechenden Passflächen 4 einer Pass-Schraube 3 zusammenwirkt.

Hierbei wird vorausgesetzt, daß die Passbohrung 5 von Haus aus in der Trägerplatte 1 vorhanden ist und daß es nur noch darum geht, den Einzugsnippel 2 an dieser Trägerplatte 1 hochgenau zu befestigen.

Nachdem also die Pass-Schraube 3 in der Passbohrung 5 praktisch spielfrei gehalten wird, greift die Pass-Schraube 3 mit einem entsprechenden Gewindeansatz 8 über die Fläche der Trägerplatte 1 hinaus und ist dort in ein entsprechendes Gewinde 7 des Einzugsnippels 2 eingeschraubt. Dieses Gewinde 7 kann spielbehaftet sein, denn die eigentlichen hochgenauen Anlageflächen bilden sich einmal zwischen dem Bund 12 des Einzugsnippels 2 und der zugeordneten Auflagefläche 9 an der Außenseite der Trägerplatte 1 und zum zweiten bildet der Bund 12 einen radial außenliegenden Zentrierdurchmesser 11, der passgenau in eine zugeordnete Aufnahmebohrung in den Schnellspannzylinder 39 eingreift und dort passgenau gehalten wird. Wichtig ist, daß sich die Passbohrung 5 in der Trägerplatte 1 in eine Passbohrung 6 in den Einzugsnippel 2 fortsetzt, so daß also diese beiden Passbohrungen 5,6 fluchtend zueinander ausgerichtet sind und damit der Einzugsnippel 2 hochgenau zentriert zu der Längsachse der Passbohrung 5 in der Trägerplatte 1 befestigt ist.

In den folgenden Zeichnungen gelten die gleichen Bezugszeichen für die gleichen Teile. Es kann daher auf einzelne Bezeichnungen verzichtet werden, weil diese bereits schon anhand der Figur 1 oder weiteren Figuren erläutert wurden.

In Figur 2 ist im Unterschied zu Figur 1 vorausgesetzt, daß in der Trägerplatte 1 eine abgesetzte Stufenbohrung vorhanden ist, die aus einer unteren Ausnehmung 15 und einer oberen Ausnehmung 15a besteht, die beide durch einen radial einwärts ragenden Ansatz 15b voneinander abgetrennt sind.

Es geht nun darum, erfindungsgemäss in eine derartige, abgesetzte Ausnehmung 15, 15a, 15b den Einzugsnippel 2 hochgenau zu befestigen. Zu diesem Zweck ist vorgesehen, daß der Innenumfang der Ausnehmung 15 hochgenau bearbeitet ist und entsprechende radiale Passflächen 16 aufweist. In diese Ausnehmung 15 greift nun eine Zentrierbüchse 14 ein, die ebenfalls einen hochgenau bearbeiteten Außenumfang aufweist, der sich an die Passfläche 16 anlegt und dort zentriert. Diese Zentrierbüchse 14 greift wiederum passend in die Passfläche 17 einer entsprechenden Ausnehmung 17a im Einzugsnippel 2 ein.

Im Ergebnis setzt sich also die hochgenau bearbeitete Ausnehmung 15 in der Trägerplatte 1 in die fluchtend dazu angeordnete und in axialer Verlängerung angeordnete Ausnehmung 17a fort. Beide Ausnehmungen 15,17a werden durch die Zentrierbüchse 14 miteinander verbunden und passgenau zusamengehalten.

Zum Zusammenhalten der Teile ist eine Schraube 13 vorgesehen, die spielbehaftet sein kann. Diese Schraube wird mit ihrem Gewindebolzen in ein zugeordnetes Gewinde 18 im Einzugsnippel eingeschraubt, und dieses Gewinde 18 kann spielbehaftet sein, weil ja die Ausrichtung des Einzugsnippels 2 zu der Trägerplatte 1 über die vorher beschriebenen Ausnehmungen 15,17a und die Zentrierbüchse 14 erfolgt.

Im Unterschied zu Figur 2 zeigt die Figur 3, daß die Schraube 13 in eine anders geformte Stufenausnehmung in einer Trägerplatte 1 befestigt werden kann. Hierzu ist vorgesehen, daß in die eine Ausnehmung 15a eine Einsatzscheibe 19 mit einem zugeordneten Gewinde 20 eingesetzt ist, wobei diese Einsatzscheibe 19 durchaus spielbehaftet in der Ausnehmugn 15a gelagert sein kann.

Die eigentliche Zentrierung erfolgt wiederum durch eine Zentrierbüchse 21, die gegenüber der rein axial ausgerichteten Zentrierbüchse 14 einen axialen Ansatz 22 und einen hierzu abgewinkelten, radialen Ansatz 23 aufweist.

Ansonsten gilt für die Bearbeitung der Flächen und die Funktion der Zentrierbüchse die gleiche Darstellung, wie sie anhand der Figur 2 in Verbindung mit der Zentrierbüchse 14 erläutert wurde. Bei der Ausführungsform nach Figur 3 muß der Außenumfang des radialen Ansatzes 23 entsprechend bearbeitet sein.

Wichtig hierbei ist, daß die Zentrierbüchsen 21,14 frei auswechselbar sind, d.h. sie können genau der von Haus aus vorhandenen Stufenausnehmung 15,15a,15b angepasst werden und gewährleisten auf diese Weise eine hochgenaue Anpassung eines Einzugsnippels 2 an eine entsprechend vorhandene Stufenausnehmung in einer Trägerplatte 1. Es handelt sich also sozusagen um Adapterstücke, die erst durch ihr Vorhandensein die hochgenaue Zentrierung des Einzugsnippels 2 an dieser Stufenbohrung gewährleisten.

Diese Zentrierbüchsen 14 sind auswechselbar, d.h. sie werden nur für die Befestigung des Einzugsnippels 2 verwendet; sobald die Bearbeitung beendet ist, können die Schrauben 13 jeweils entfernt werden zusammen mit den Zentrierbüchsen 14,21.

Es verbleibt dann jeweils nur die Stufenausnehmung 15,15a,15b, die für die weitere Verarbeitung der Trägerplatte 1 montageseitig erforderlich ist.

In Figur 4 ist noch dargestellt, daß die Passbohrung mit der Pass-Schraube 3 auch im Einzugsnippel 2 vorhanden sein kann und die Schraube vonseiten des Einzugsnippels her eingeschraubt wird, so daß die Passbohrung 5 auch als Sackbohrung ausgebildet sein kann. Ansonsten gelten die gleichen Erläuterungen bezüglich der zueinander zentrierten Flächen, wie sie anhand der Figur 1 gegeben wurden.

In Figur 5 ist im Vergleich zu Figur 2 wiederum eine Zentrierbüchse 14 dargestellt, die in die Ausnehmugn 15 eingepresst ist und die in der Ausnehmung verbleiben soll. Diese Zentrierbüchse 14 bildet eine innenliegende Passfläche 4 in Verbindung mit dem Außenumfang der Pass-Schraube 3 und ferner greift die Pass-Schraube 3 in eine zugeordnete Passbohrung 6 im Einzugsnippel 2 ein.

In Figur 6 ist dargestellt, daß die Zentrierbüchse 14 wieder - wie in Figur 2 dargestellt - in die Ausnehmung 15 eingepasst ist und dort auswechselbar gelagert ist, wobei die Schraube 26 nun mit ihrer Kopfseite her von der Seite des Einzugsnippels eingeschraubt ist und in ein zugeordnetes Gewinde in der Trägerplatte 1 eingreift. Hier muß lediglich aufseiten der Trägerplatte 1 eine entsprechende Gewindebohrung mit einem Gewinde 7 vorgesehen werden.

Die Passflächen 25 in der Stufenausnehmung 15 fluchtet wieder mit der Passfläche 24 in der zugeordneten Ausnehmung im Einzugsnippel 2.

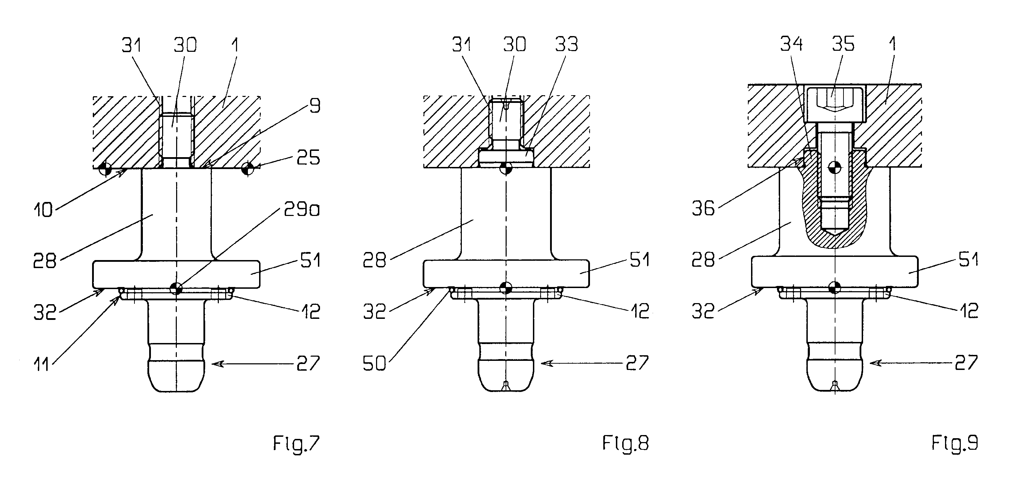

Die Figuren 7 bis 17 zeigen sogenannte verlängerte Einzugsnippel, d.h. Einzugsnippel 27 mit Hals oder mit Ansatz 28. Hierbei ist wesentlich, daß der Ansatz 28 axial verlängert ist und eine Distanz geschaffen wird zwischen der unteren Fläche der Trägerplatte 1, die dem Schnellspannzylinder 29 zugewandt ist (siehe Figur 11) und zugeordnetem Nippelteil 42 des Einzugsnippels 27, der vom Schnellspannzylinder 39 aufgenommenw ird.

Auf diese Weise erhält die Trägerplatte 1 einen Abstand zur Oberfläche des Schnellspannzylinders 39 (siehe Figur 11), und die Trägerplatte kann dann z.B. durchgebohrt werden, ohne daß die Gefahr besteht, daß hierbei der Schnellspannzylinder 39 beschädigt wird.

Bei diesen Ausführungsformen ist wesentlich, daß der Ansatz 28 in einen Auflagebund 51 übergeht, an dessen Unterseite wiederum der Bund 12 mit seinem radial außenliegenden Zentrierdurchmesser 11 vorgesehen ist. Dieser Bund 12 mit seinem Zentrierdurchmesser 11 greift ja gemäss Figur 11 in den Schnellspannzylinder 39 ein und wird dort zentriert.

Außerhalb dieses Bundes 12 liegt aber die Auflagefläche 32 auf der Oberfläche des Schnellspannzylinders 39 auf und ergibt dort die Zentrierung am Schnellspannzylinder. Ferner geht dann der Auflagebund 51 in den Ansatz 28 verringerten Durchmessers über, und der Ansatz 28 ist dann über die vorher beschriebenen Maßnahmen nach den Figuren 1 bis 6 an der Trägerplatte 1 wiederum hochgenau befestigt.

Die Befestigungsarten werden nun im folgenden beschrieben:

Zusätzlich wird noch die sogenannte Nullpunkt-Orientierung beschrieben, auf die es in der vorliegenden Anmeldung ankommt.

Mit dem Nullpunkt 29 an der Auflagefläche 10 der Trägerplatte wird dargestellt, daß dies eine erste hochgenaue Referenzfläche ist, die in der Höhe vorgesehen ist. Dieses Maß, d.h. der Nullpunkt 29, wird nun entsprechend dem genau bearbeiteten Ansatz 28 in Form des Nullpunkts 29a übernommen, d.h. dort hintransferiert, weil die Auflagefläche 32 mit praktisch parallel und in genauem Abstand zu der Auflagefläche 10 angeordnet ist.

Die Befestigung dieses verlängerten Einzugsnippels 27 erfolgt hierbei in einer Gewindebohrung 31 in der Trägerplatte 1, wo ein zugeordneter Gewindeansatz 30 werkstoffeinstückig an dem Ansatz 28 des Einzugsnippels 27 angeformt ist.

Das Gewinde der Gewindebohrung 31 bildet hierbei die Passung aus.

In der Figur 8 sind im Vergleich zu Figur 7 die gleichen Teile dargestellt, nur daß zusätzlich noch ein weiterer Zentrierbund 33 an dem Ansatz 28 angeordnet ist, der in eine zugeordnete, passgenau bearbeitete Aufnahme in der Trägerplatte 1 eingreift und dort zentriert ist.

Im Ausführungsbeispiel nach Figur 9 ist dargestellt, daß es nicht auf einen werkstoffeinstückigen Gewindeansatz 30 ankommt, sondern daß auch eine Schraube 35 verwendet werden kann. Auch hier ist ein Zentrierbund 34 an dem Ansatz 28 angeformt, der in eine hochgenau bearbeitete Aufnahme im Bereich einer Stufenbohrung in der Trägerplatte 1 eingreift. Die Stufenbohrung ist hierbei mit der Stufenbohrung 15,15a, 15b nach Figur 2 vergleichbar.

Die Befestigung des Einzugsnippels 27 erfolgt hierbei mittels der Schraube 35.

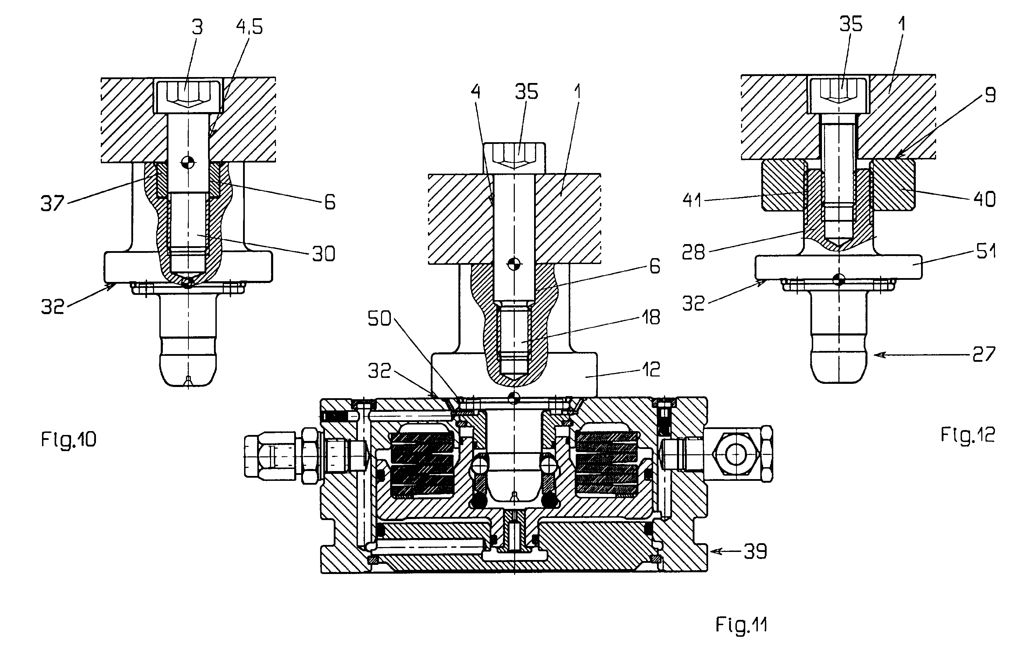

Im Vergleich zur Figur 9 zeigt die Figur 10, daß eine sogenannte Zentrierbüchse 37 oder Verschleißbüchse in einer zugeordneten passgenauen Aufnahme im Hals 28 des Einzugsnippels 27 vorhanden ist und der Gewindeansatz 30 der Schraube 35 in ein zugeordnetes Innengewinde im Einzugsnippel 27 eingreift. Die Passung erfolgt hierbei über die Passfläche 4 innerhalb der Passbohrung 5 am Außenumfang der Pass-Schraube 3 und zusätzlich setzt sich die Passfläche 4 in eine zugeordnete Passbohrung 6 im Nippel fort, wo die Zentrierbüchse 37 eingesetzt ist.

Die Figur 11 zeigt die allgemeine Befestigung einer Trägerplatte 1 auf der Oberfläche eines Schnellspannzylinders 39. Hierbei kommen sämtliche Befestigungsarten in Frage, wie sie anhand der vorher beschriebenen Figuren 1 bis 10 erläutert wurden. Bei diesem Ausführungsbeispiel ist die Darstellung, daß die Ausrichtung des Einzugsnippels auf der Oberfläche des Schnellspannzylinders im Bereich der Auflagefläche 32 erfolgt, die mit einer zugeordneten bearbeiteten Auflagefläche auf der Oberfläche des Schnellspannzylinders 39 zusammen wirkt. Der Ansatz 12 greift hierbei in eine zugeordnete Aufnahme am Schnellspannzylinder ein und wird dort mittels eines O-Rings 50 abgedichtet.

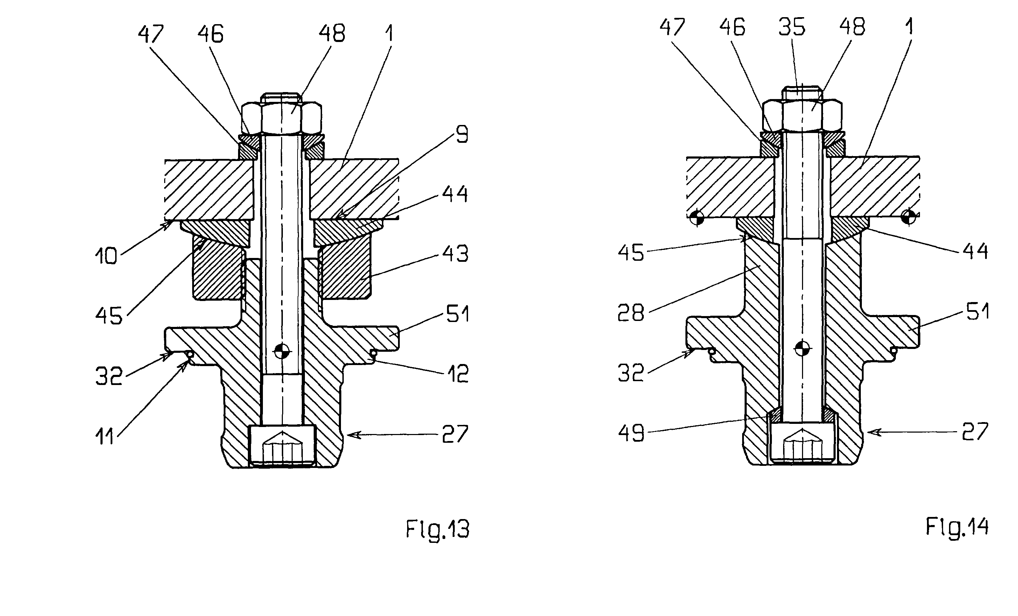

Die Figur 12 zeigt wesentliche Gemeinsamkeiten mit der Figur 10, nur daß der gesamte Ansatz 28 noch höheneinstellbar an der Unterseite der Trägerplatte 1 gehalten ist. Hierbei trägt der Ansatz 28 ein entsprechendes Außengewinde 41, auf dem eine Einstellmutter 40 aufgeschraubt ist, die sich mit ihrer oberen Auflagefläche 9 an der Unterseite der Trägerplatte 1 passgenau abstützt.

Entsprechend der Verdrehlage der Einstellmutter 40 kann somit der axiale Abstand des Auflagebundes 51 zur Ebene der Trägerplatte 1 einstellbar und feststellbar ausgebildet sein.

Hierbei kommt es insbesondere auf den einstellbaren Abstand zwischen der Auflagefläche 32 und der zugeordneten Auflagefläche 9 an.

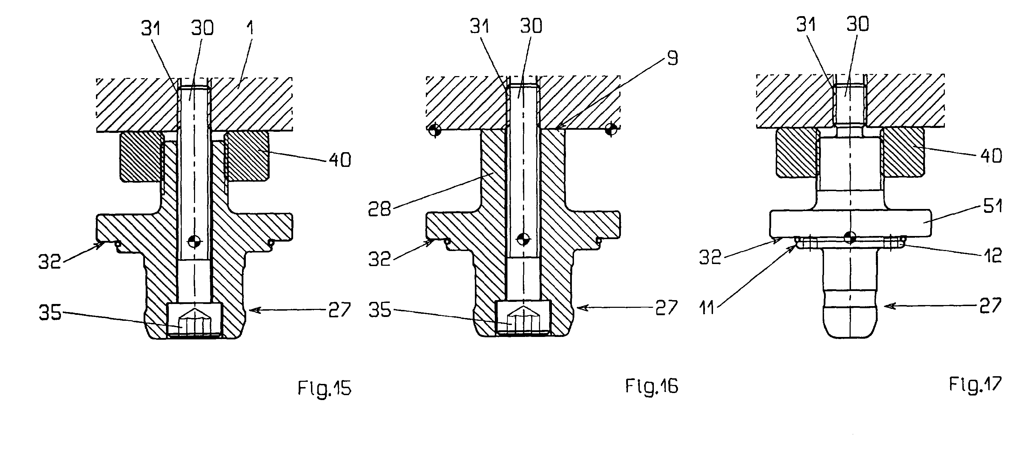

Die Figuren 15 und 17 zeigen mit dem Ausführungsbeispiel nach Figur 12 verwandte Ausführungsbeispiele. Dort ist dargestellt, daß zwar dieselbe Höheneinstelleinrichtung vorhanden ist, daß aber die Schraube 35 mittels einem Gewindeansatz 30 in eine zugeordnete Gewindebohrung 31 an der Trägerplatte 1 eingreift.

Die Figur 16 zeigt die starre Befestigung eines derartigen verlängerten Einzugsnippels 27 mittels einer Schraube 35, während die Figur 17 wiederum die höheneinstellbare Befestigung mittels der Einstellmutter 40 darstellt, wobei aber in diesem Ausführungsbeispiel der Ansatz 28 durch einen Gewindeansatz 30 verlängert ist, der in eine zugeordnete Gewindebohrugn 31 in der Trägerplatte 1 eingreift.

Es handelt sich also um ein werkstoffeinstückiges Teil, bestehend aus dem Einzugsnippel 27 mit dem daran ansetzenden Ansatz 28 und dem Gewindeansatz 30.

In Figuren 13 und 14 wird eine sogenannte Pendellagerung eines Einzugsnippels 27 an einer Trägerplatte 1 dargestellt.

Hierbei ist wesentlich, daß die Auflagefläche 9 an der Unterseite der Trägerplatte 1 nicht besonders bearbeitet werden braucht. Sie kann roh sein, sie kann verzundert sein und sie kann beliebige Formgebung aufweisen, d.h. verwunden oder verspannt. Die eigentliche Ausrichtung des Einzugsnippels 27 zu der Fläche der Trägerplatte 1 erfolgt durch die jetzt zu beschreibende Pendellagerung.

Diese Pendellagerung besteht im wesentlichen aus einer Schraube 35, die an ihrer gegenüberliegenden Seite eine Mutter 48 aufweist, welche auf zwei pendelartig zueinander bewegbaren Pendelscheiben 46,47 aufliegt. Gleichfalls bildet der Ansatz 28 des Einzugsnippels 27 ein Außengewinde auf, auf welches eine Einstellmutter 43 aufgeschraubt ist, die eine axiale obere Pendelfläche 45 aufweist. Mit dieser Pendelfläche zusammenwirkend wirken die Pendelflächen einer Pendelscheibe 44, die mit ihrer gegenüberliegenden Fläche an der Auflagefläche 9 an der Trägerplatte 1 anliegt.

Wird nun die Schraube 35 geringfügig gelöst, dann kann die Mutter 43 verstellt werden, und die gesamte Anordnung lässt sich nun durch Verschiebung an den Pendelflächen 45 (Einstellmutter 43 an der Pendelscheibe 44) im Winkel zur Längsachse der Schraube 35 schwenken und so eine lagenrichtige und spannungsfreie Einspannung des Einzugsnippels 27 an der Trägerplatte 1 erreichen. Die Trägerplatte 1 wird hierdurch nicht durch irgendwelche Querkräfte verzogen oder verworfen; und die Oberfläche (Auflagefläche 9) an der Trägerplatte 1 muß nicht in besonderer Weise bearbeitet werden.

In analoger Weise zum Ausführungsbeispiel nach Figur 13 zeigt die Figur 14, daß auch die Einstellmutter 43 entfallen kann und stattdessen nur eine einfache Pendellagerung, bestehend aus dem Ansatz 28, vorgesehen werden kann, der an seiner axialen oberen Seite die vorher erwähnte Pendelfläche 45 trägt, die mit einer zugeordneten Pendelfläche der darüber liegenden Pendelscheibe 44 zusammenwirkt, die sich wiederum an der Auflagefläche 9 anlegt. Hier wird vorausgesetzt, daß eine Stufenbohrung im Einzugsnippel 27 vorhanden ist, so daß der Kopf der Schraube 35 sich an einer Pendelscheibe 49 anlegt, um wiederum eine verzugsfreie Spannung im Hinblick auf die oben liegenden und gegenüberliegenden Pendelscheiben 46,47 zu ermöglichen.

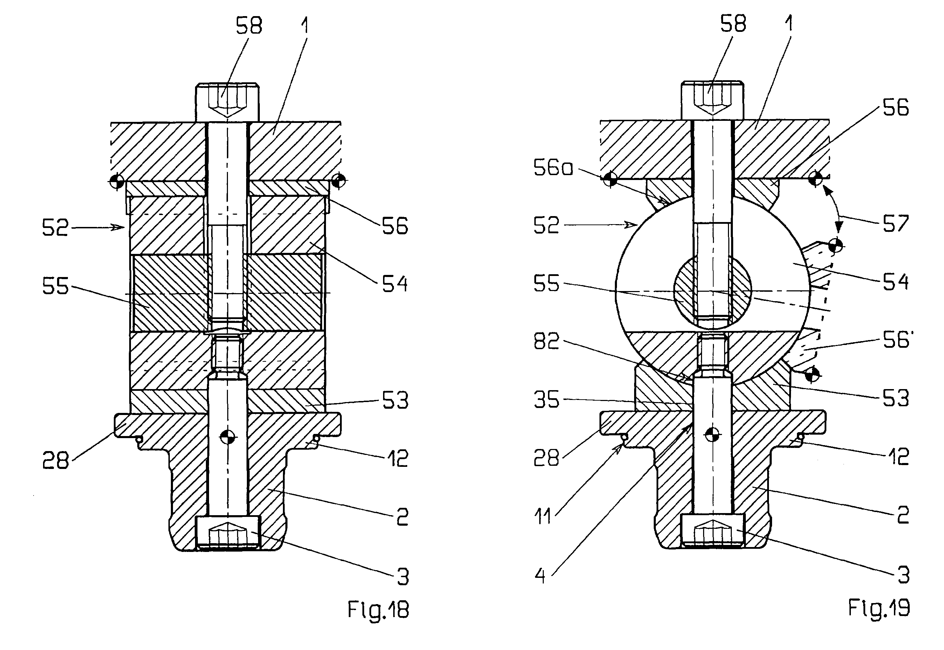

In den Figuren 18 bis 21 werden nun Schwenkbefestigungen für einen Einzugsnippel 2 dargestellt. Hierbei ist es gleichgültig, ob der Einzugsnippel 2 einen verlängerten Hals 28 aufweist oder nicht. Im Ausführungsbeispiel ist der Halsansatz 28 nur in axialer Richtung kurz gehalten; er kann jedoch beliebig lang ausgebildet werden. Der Einzugsnippel 27 wird von einer Pass-Schraube 3 durchgriffen, deren Funktion und deren Passflächen bereits schon in Verbindung mit den Figuren 1 und 5 beschrieben wurden.

Wichtig ist, daß die Pass-Schraube 3 sich an zugeordneten Passflächen 4,5 anlegt, welche fluchtend zueinander ausgerichtet sind. Die Passfläche 5 ist hierbei im Bereich eines unteren Schwenklagerteils 53 angeordnet, welches auf dem Ansatz 28 lagenrichtig aufgelegt ist.

Der Nippel 27 macht 3 Zentrierungen, nämlich einmal im Bereich der Passfläche 4, einmal im Bereich der Passfläche 5 und einmal im Bereich der Passfläche 82, die gebildet ist durch den Ansatz der Pass-Schraube 3, der in einer zugeordneten Aufnahme in einem geschlitzten Rohr 54 eingreift.

Die gesamte Schwenkvorrichtung 52 wird also gebildet durch ein geschlitztes Rohr 54, welches mit seinem Außenumfang an einer zugeordneten, zylindrischen Fläche am unteren Schwenklagerteil 53 mit der Pass-Schraube 3 befestigt ist. Es ist ein mittlerer Schwenkbolzen 55 vorhanden, der in den Innenumfang des Rohres 54 eingesteckt ist und der von einer weiteren Schraube 58 senkrecht durchgriffen wird, welche den Klemmbolzen 55 an der oberen, inneren Fläche des Rohres anlegt und damit das Rohr mit seinem Außenumfang an einem oberen Schwenklagerteil 56 verschwenkbar anlegt.

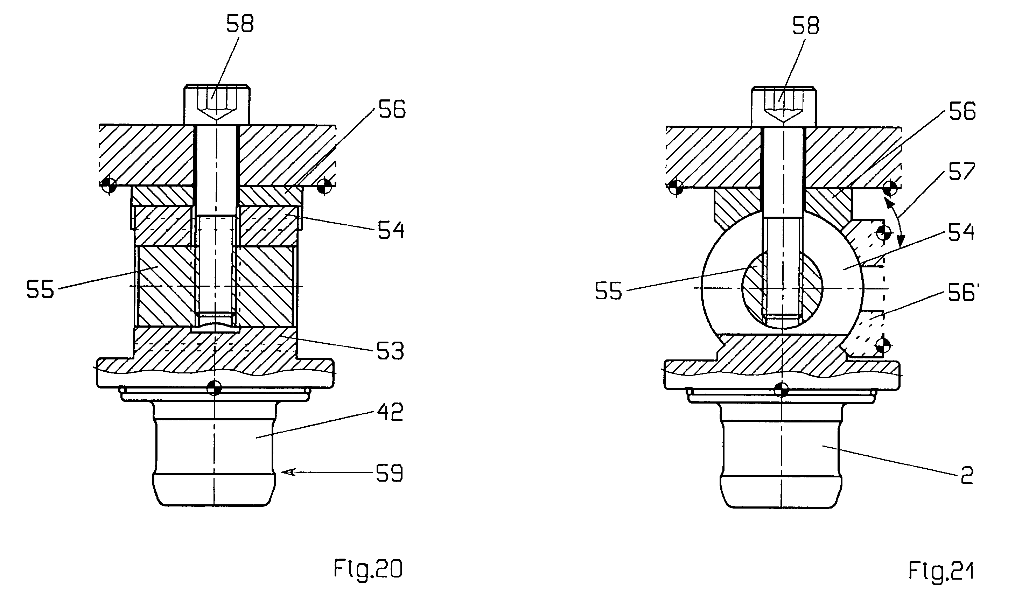

Wird nun die Schraube 58 gelockert, dann kann der Klemmbolzen 55 mit seinem Außenumfang an der Innenseite des Rohres entlanggleiten und das Rohr selbst kann mit seinem Außenumfang an der zugeordneten, zylindrischen Drehfläche 56a am oberen Schwenklagerteil 56 entlanggleiten. Auf diese Weise kann also die Längsachse der Pass-Schraube 3 im Winkel zur Längsachse der Schraube 58 eingestellt und festgestellt werden. Es kann die gesamte Anordnung nach links und rechts geschwenkt werden. In Figur 19 ist dargestellt, daß die Verschwenkung im Winkel von über 90° erfolgen kann, wobei in der Schwenkrichtung 57 das obere Schwenklagerteil 56 in seiner Stellung 56' dargestellt ist.

Für die Figuren 20 und 21 gelten die gleichen Erläuterungen, wie sie anhand der Figuren 18 und 19 gegeben wurden. Nur ist im Unterschied dazu das untere Schwenklagerteil 53 werkstoffeinstückig mit dem Einzugsnippel 59 verbunden, und es fehlt die Pass-Schraube 3. Der Einzugsnippel 59 ist also ein integriertes Teil, welches Teil der Schwenkvorrichtung ist, wobei der Einzugsnippel 59 auch noch werkstoffeinstückig mit dem geschlitzten Rohr 54 ist und lediglich in dieses Rohr der vorher erwähnte Klemmbolzen 55 eingeschoben ist, der mittels der Schraube 58 befestigt wird.

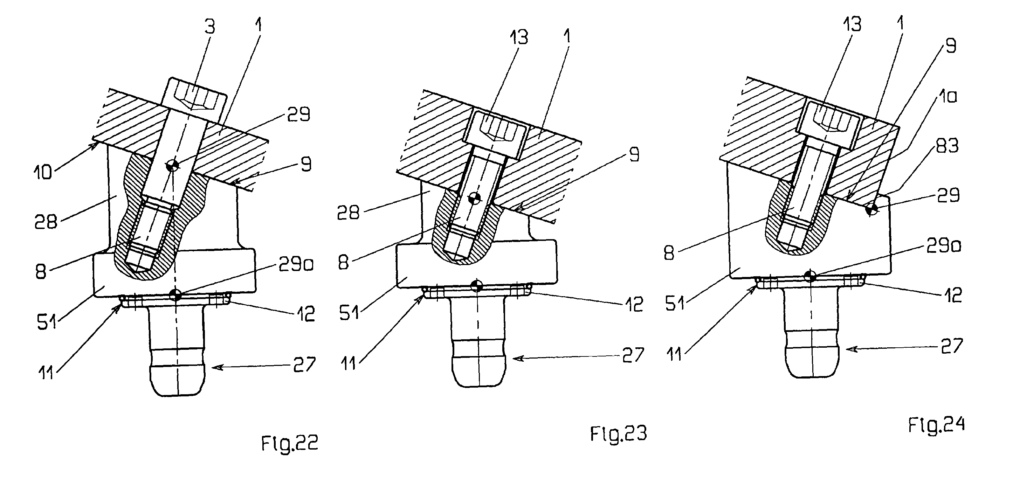

Die Figuren 22 bis 24 zeigen mögliche feststehende Winkelverschraubungen eines Einzugsnippels 2,27 an einer zugeordneten Trägerplatte. Hierbei ist vorgesehen, daß der Ansatz 28 eine entsprechende schräge Auflagefläche 9 ausbildet, die an der Unterseite der Trägerplatte 1 anliegt. Hierbei wird wiederum der Nullpunkt 29 der Pass-Schraube auf den Nullpunkt 29a des Einzugsnippels 2,27 übertragen. Die ist jedoch nicht lösungsnotwendig; die beiden Teile können auch nicht fluchtend zueinander angeordnet werden.

Anstatt der Pass-Schraube 3 nach Figur 2 kann auch eine spielbehaftete Schraube 13 verwendet werden, die mit einem zugeordneten Gewindeansatz 8 in ein zugeordnetes Innengewinde im Einzugsnippel 2,27 eingeschraubt ist. Ansonsten gelten die gleichen Erläuterungen, wie anhand der Figur 22 gegeben wurden.

Die Figur 24 zeigt im Vergleich zu Figur 23 noch, daß ein Anschlag zwischen der äußeren Stirnfläche 1a der Trägerplatte 1 und einer zugeordneten Ausfräsung im Ansatz 28 des Einzugsnippels 27 vorgesehen sein kann. Auch hier kann ein Nullpunkt 29 an dieser Kante vorgesehen werden, der unabhängig von dem Nullpunkt 29a des Einzugsnippels 27 ist.

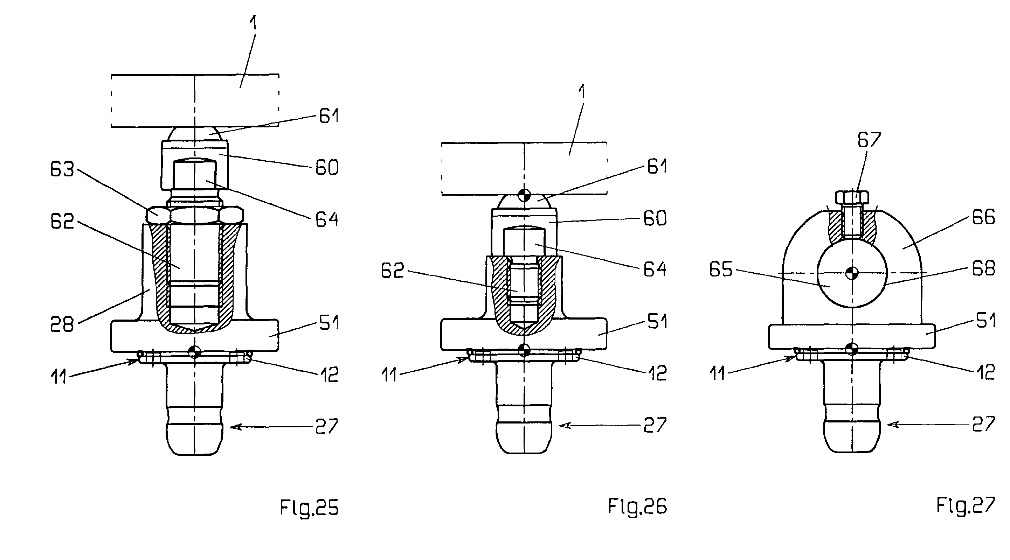

Die Figuren 25 und 26 zeigen sogenannte Abstütznippel, d.h. der Einzugsnippel 27 trägt lediglich die Trägerplatte 1, ohne mit dieser kraftschlüssig verbunden zu sein. Eine derartige Abstützung wird verwendet, wenn die Trägerplatte an mehreren Stellen bereits schon in zugeordneten Schnellspannzylindern eingespannt ist und es darum geht, daß man dazwischenliegende Abschnitte noch gesondert abstützen will, um diese gegen Durchbiegung zu schützen. Hier sind die sogenannten Abstütznippel vorhanden, wobei der Einzugsnippel 27 nach Figuren 25 und 26 einen oberen Pendelkopf 60 trägt, der eine Pendelkugel 61 ausbildet, die sich an der Unterseite der Trägerplatte 1 anlegt. Der Pendelkopf 60 setzt sich werkstoffeinstückig in einen Gewindestift 62 fort, wobei zur Verstellung des Gewindestiftes die Schlüsselweite 64 vorgesehen ist. Die Einstellung dieses Gewindestiftes 62 kann mittels einer Contermutter 63 festgelegt werden.

Die Figur 26 zeigt eine gegenüber Figur 25 vereinfachte Ausgestaltung, wo die Contermutter 63 entfällt und der Pendelkopf 60 mit seinem Gewindestift 62 in eine zugeordnete Gewindebohrung im Einzugsnippel fest eingeschraubt ist.

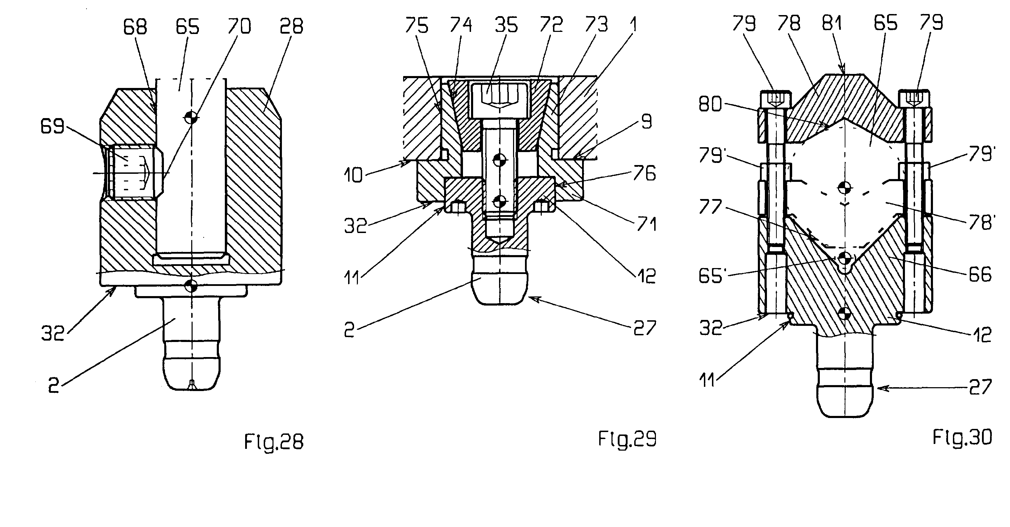

Die Figur 27 zeigt die Befestigung eines Einzugsnippels 27 an einer runden Werkstückwelle 65. Hierbei ist es allerdings nicht lösungsnotwendig, daß die Werkstückwelle 65 vollkommen kreisrund ausgebildet ist. Sie kann auch mehreckig, vieleckig oder oval sein. Wichtig ist nur, daß zwischen dem Außenumfang der zu bearbeitenden Werkstückwelle 65 und der zugeordneten Passbohrung 68 im Bereich des Nippelansatzes 66 Passflächen vorhanden sind, die eine hochgenaue, lagenrichtige Zentrierung der beiden Teile zueinander gestatten. Zur Fixierung der Verbindung ist eine Klemmschraube 67 vorgesehen, die eine zugeordnete Gewindebohrung im Nippelansatz 66 eingeschraubt ist und die sich mit ihrem bolzenseitigen Ende auf der Oberfläche der Werkstückwelle 65 abdrückt.

Die Figur 28 zeigt die Befestigung eines Einzugsnippels in axialer Richtung an dem freien, vorderen Ende einer zu bearbeitenden Werkstückwelle 65. Hierbei wird vorausgesetzt, daß in der Werkstückwelle seitlich ein Pass-Konus 70 eingearbeitet ist, in den eine zugeordnete Spannschraube 69 mit ihrem gleich geformten Pass-Konus eingreift und die beiden Teile zueinander zentriert. Hierbei wird also der Ansatz 28 des Einzugsnippels mit dieser Werkstückwelle 65 zentriert. Es ist hierbei nicht lösungsnotwendig, daß der Ansatz 28 werkstoffeinstückig mit den unteren Teilen (Bund 51 und 12 des Einzugsnippels) verbunden ist. Es können auch zwei Teile gebildet sein.

Die Figuren 29 und 30 zeigen sogenannte Spannverbindungen, bei denen der zu befestigende Einzugsnippel 2,2 7 nicht nur formschlüssig, sondern auch kraftschlüssig an einer Trägerplatte 1 befestigt wird. Hierbei wird gemäss der Ausführungsform nach Figur 29 vorausgesetzt, daß in die Ausnehmung im Bereich der Trägerplatte ein Spreizkonus 73 eingreift, der Teil einer Spannzange 71 ist. Die Spannzange legt sich hierbei mit ihrem äußeren Ansatz an den zugeordneten Auflageflächen 9 an der Unterseite der Trägerplatte 1 an. In den Spreizkonus 73 wird ein Spannkonus 73 eingesetzt, der in seiner mittleren Ausnehmung die Schraube 35 trägt, welche mit ihrem Gewindeteil in den Einzugsnippel 2,27 eingeschraubt ist. Hierbei legt sich der Einzugsnippel lagengenau und passgenau mit seinem ohnedies zur Zentrierung vorgesehenen Zentrieransatz 11 in eine zugeordnete Aufnahme 67 im Bereich der Spannzange 71 an und wird dort zentriert. Gleichzeitig legt sich die Spannzange 71 auch mit zugeordneten Auflageflächen an der Auflagefläche 9 an. Wird nun die Schraube 35 festgezogen, dann gleiten die Konusflächen 74 aneinander, wobei die Spannzange im Bereich der Anlagefläche 75 zentriert bleibt. Die Spannzange spreizt sich somit der Durchgangsbohrung der Trägerplatte 1 auseinander und legt somit den Einzugsnippel 2,27 an der Unterseite der Trägerplatte 1 an.

Vorteil dieser Maßnahme ist, daß bei einer vorhandenen Durchgangsbohrung oder auch Sackbohrung in der Trägerplatte jederzeit durch die hier beschriebene Spannzange und den Spreizkonus 73 eine lagenrichtige und hochgenaue Befestigung eines Einzugsnippels gegeben ist, ohne daß diese Durchgangsbohrung oder Sackbohrung noch weiter bearbeitet werden muß.

Im Falle des Vorhandenseins einer Sackbohrung kann genauso die Schraube 35 verwendet werden, nur daß dann die Schraube 35 drehfest festgelegt wird und der Einzugsnippel auf das bolzenseitige Ende der Schraube aufgeschraubt wird.

Die Figur 30 zeigt eine weitere Spannbefestigung einer zu bearbeitenden Werkstückwelle 65. Es sind hierbei zwei gegenüberliegende Prismenaufnahmen 77,80 vorgesehen, wobei die untere Prismenaufnahme dadurch gebildet wird, daß der verlängerte Nippelansatz 66 eines Einzugsnippels 2,27 Prismenflächen aufweist, in welche die zu bearbeitende Werkstückwelle 65 eingepresst wird.

Gegenüberliegend ist die andere Prismenaufnahme 80 durch gleichfalls prismatische Flächen ausgebildet, wobei die Spannung hierbei durch einen oberen Spannbügel 78 erreicht wird, welcher mittels Spannschraube 79 gegenüber dem unteren Ansatz 66 verschraubt wird. Auf diese Weise wird also der Einzugsnippel 2,27 fest, aber in beliebigen Winkeln einstellbar, zu der zu bearbeitenden Werkstückwelle 65 verbunden.

Diese Anordnung hat den weiteren Vorteil, daß nicht nur groß dimensionierte Werkstückwellen 65 bearbeitet werden können, sondern es können auch relativ klein dimensionierte Werkstückwellen 65' bearbeitet werden. Soll eine derartig klein dimensionierte Werkstückwelle 65' bearbeitet werden, dann wird der obere Spannbügel 78 herausgenommen, um 180° gedreht und in dieser verdrehten Lage in seiner Stellung 78' wieder eingebaut, so daß seine vorher obere Fläche (Gegenprisma 81) nun auf die Oberfläche der Werkstückwelle 65' drückt und diese ebenfalls einspannt. Diese kleinere Werkstückwelle 65' wird von der unteren Prismenaufnahme 77 gegengehalten.

### Zeichnungs-Legende

- 1: Trägerplatte 1a
- 2: Einzugsnippel
- 3: Paßschraube
- 4: Paßfläche (Schraube)
- 5: Paßbohrung
- 6: Paßbohrung (Nippel)
- 7: Gewinde
- 8: Gewindeansatz
- 9: Auflagefläche
- 10: Auflagefläche
- 11: Zentrierdurchmesser
- 12: Bund
- 13: Schraube (mit Spiel)
- 14: Zentrierbüchse
- 15: Ausnehmung 15a,15b
- 16: Paßfläche
- 17: Paßfläche 17a Ausnehmung
- 18: Gewinde
- 19: Einsatzscheibe
- 20: Gewinde
- 21: Zentriebüchse
- 22: Ansatz (axial)
- 23: Ansatz (axial)
- 24: Paßfläche
- 25: Paßfläche
- 26: Schraube
- 27: Einzugsnippel (mit Hals)
- 28: Ansatz
- 29: Nullpunkt 29a
- 30: Gewindeansatz
- 31: Gewindebohrung
- 32: Auflagefläche
- 33: Zentrierbund
- 34: Zentrierrbund
- 35: Schraube
- 36: Paßfläche
- 37: Zentrierbüchse
- 38: Gewindeansatz
- 39: Schnellspannzylinder
- 40: Einstellmutter
- 41: Gewinde
- 42: Nippelteil
- 43: Einstellmutter
- 44: Pendelscheibe
- 45: Pendelfläche
- 46: Pendelscheibe
- 47: 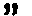
- 48: Mutter
- 49: Pendelscheibe
- 50: O-Ring
- 51: Auflagebund
- 52: Schwenkvorrichtung
- 53: Schwenklagerteil (unten)
- 54: Rohr
- 55: Klemmbolzen
- 56: Schwenklagerteil (oben)
- 56a: Drehfläche
- 57: Schwenkrichtung
- 58: Schraube
- 59: Einzugsnippel
- 60: Pendelkopf
- 61: Pendelkugel
- 62: Gewindestift
- 63: Kontermutter
- 64: Schlüsselweite
- 65: Werkstückwelle 65'
- 66: Nippelansatz
- 67: Klemmschraube
- 68: Paßbohrung
- 69: Spannschraube
- 70: Paßkonus
- 71: Spannzange
- 72: Spannkonus
- 73: Spreizkonus
- 74: Konusflächen
- 75: Anlagefläche
- 76: Aufnahme
- 77: Prismenaufnahme (unten)
- 78: Spannbügel 78'
- 79: Spannschraube
- 80: Prismenaufnahme (oben)
- 81: Gegenprisma
- 82: Paßfläche
- 83: Ausfräsung

## Patentansprüche

1. Einzugsnippel mit Befestigung an einem Werkstück oder einer Trägerplatte (1), **dadurch gekennzeichnet,** daß in der Trägerplatte (1) mindestens eine Bohrung (5, 31) vorhanden ist und daß sich der Einzugsnippel (2, 27, 59) mit einer im wesentlichen ebenen Auflagefläche (9) an einer zugeordneten Auflagefläche (10) an der Aussenseite der Trägerplatte (1) abstützt.

2. Einzugsnippel mit Befestigung an einem Werkstück oder einer Trägerplatte (1) nach Anspruch 1, **dadurch gekennzeichnet,** daß die Auflagefläche (9) des Einzugsnippels (27) mittels einer auf den Ansatz (28) des Einzugsnippels (27) aufgeschraubten Einstellmutter (40) gebildet wird.

3. Einzugsnippel mit Befestigung an einem Werkstück oder einer Trägerplatte (1) nach Anspruch 1, **dadurch gekennzeichnet,** daß der Einzugsnippel (2; 27; 59) über eine Schwenkvorrichtung (52 ;43-49; 52) schwenkbar und feststellbar an der Trägerplatte (1) befestigt ist.

4. Einzugsnippel mit Befestigung an einem Werkstück oder einer Trägerplatte (1) nach Anspruch 1, **dadurch gekennzeichnet,** daß die Befestigung des Einzugsnippels (2, 27) über der Fläche der Trägerplatte (1) mittels Einstellvorrichtungen (69,70; 71-76; 77-83) einstellbar ausgebildet ist.

5. Einzugsnippel mit Befestigung an einem Werkstück oder einer Trägerplatte (1) nach einem der Ansprüche 1 bis 4, **dadurch gekennzeichnet,** daß die Auflagefläche (9) des Einzugsnippels (2, 27, 59) und die zugeordnete Auflagefläche (10) der Trägerplatte (1) im wesentlichen senkrecht zur Längsachse der Bohrung (5, 31) sich erstrecken.

6. Einzugsnippel mit Befestigung an einem Werkstück oder einer Trägerplatte (1) nach einem der Ansprüche 1 bis 4, **dadurch gekennzeichnet,** daß die Auflagefläche (9) des Einzugsnippels (2, 27, 59) und die zugeordnete Auflagefläche (10) der Trägerplatte (1) im Winkel zur Längsachse der Bohrung (5, 31) sich erstrecken.
